(19)

Europäisches
Patentamt

European
Patent Office

Office européen
des brevets

(11) **EP 1 972 970 A1**

(12) **DEMANDE DE BREVET EUROPEEN**

(43) Date de publication:
   **24.09.2008 Bulletin 2008/39**

(51) Int Cl.:
   **G02B 5/08** *(2006.01)*       *C03C 17/38* *(2006.01)*

(21) Numéro de dépôt: **07103038.1**

(22) Date de dépôt: **26.02.2007**

(84) Etats contractants désignés:
   **AT BE BG CH CY CZ DE DK EE ES FI FR GB GR HU IE IS IT LI LT LU LV MC NL PL PT RO SE SI SK TR**
   Etats d'extension désignés:
   **AL BA HR MK RS**

(71) Demandeur: **AGC Flat Glass Europe SA**
   **1170 Bruxelles (BE)**

(72) Inventeur: **La désignation de l'inventeur n'a pas encore été déposée**

(74) Mandataire: **Decamps, Alain René François et al AGC Flat Glass Europe SA**
   **Intellectual Property Department**
   **R&D Centre**
   **Rue de l'Aurore, 2**
   **6040 Jumet (BE)**

(54) **Miroir a reflexion élevée**

(57)   La présente invention concerne un miroir sur feuille de verre comprenant un système de couches dont une couche réfléchissante à base d'argent, sous cette couche d'argent une couche constituée d'un alliage NiCr, dans lequel Ni est en proportion pondérale d'au moins 50%, et au dessus de la couche d'argent une couche métallique protectrice, le système de couches étant revêtu d'une laque pour miroirs.

Les miroirs selon l'invention offrent une forte réflexion, une neutralité en réflexion et une bonne résistance aux tests de vieillissement.

Fig. 1

EP 1 972 970 A1

## Description

La présente invention concerne les miroirs comprenant une feuille de verre au dos de laquelle est disposé un ensemble de couches réfléchissantes. L'invention vise en particulier les miroirs qui offrent un taux élevé de réflexion de la lumière visible incidente.

L'utilisation de couches d'argent dans des systèmes de couches appliqués sur une feuille de verre est bien connue de la littérature. Les éléments constitutifs de ces systèmes comportent usuellement, outre la couche métallique d'argent, des couches qui soit facilitent l'accrochage de la couche d'argent sur le substrat, soit protègent l'argent contre l'altération qui peut se produire au contact de l'atmosphère environnante, soit permettent de corriger les colorations indésirables en réflexion soit encore simultanément remplissent plusieurs de ces fonctions.

La difficulté est de parvenir à satisfaire les diverses exigences en conservant un taux de réflexion très élevé, notamment supérieur à 85%, et ceci en outre avec des couches d'argent dont l'épaisseur est limitée pour des raisons d'économie.

La demande EP 632 294 présente des miroirs du type de ceux visés selon l'invention. Ces miroirs comprennent sur un substrat verrier un ensemble de couches dont une couche de $SiO_2$ sur le verre pour protéger contre les migrations possibles d'ions alcalins, une couche primaire à base NiCr (sensiblement 80/20 en poids) une couche d'argent une couche de Ni et de nitrure de chrome, et pour protéger l'ensemble une couche de $Si_3N_4$. Les miroirs proposés conduisent à un taux de réflexion élevé mais les propriétés ne sont pas encore optimisées.

L'invention se propose de fournir des miroirs dont les caractéristiques par rapport à celles de l'art antérieur sont améliorées, dans des conditions de production économiquement avantageuses.

Les inventeurs ont ainsi mis en évidence que pour les miroirs produits industriellement à des fins domestiques, il était nécessaire de conserver l'usage d'une laque de protection sur le système de couche. Le choix approprié de ces laques conduit globalement à une meilleure durabilité des miroirs, notamment vis-à-vis des épreuves de vieillissement en atmosphère humide.

Toujours pour conserver une bonne durabilité de l'ensemble et améliorer les propriétés de réflexion, il est apparu selon l'invention qu'il est nécessaire de revêtir la couche d'argent d'une couche relativement épaisse de NiCr ou de chrome. De préférence la couche en question est de l'alliage NiCr.

Dans la couche NiCr recouvrant l'argent, l'alliage est constitué d'au moins 50% pondéral de Ni, et de préférence d'au moins 75%. L'alliage le plus usuel est dans des rapports pondéraux voisins de 80% de Ni pour 20% de Cr.

La couche NiCr recouvrant l'argent comprend avantageusement au moins $180mg/m^2$ de Ni et de préférence au moins $200mg/m^2$. L'accroissement de l'épaisseur de la couche au-delà d'un certain seuil n'apporte plus d'avantages, mais renchérit le coût de production. Il est préférable de maintenir la quantité de Ni dans la couche NiCr inférieure à 350 et de préférence inférieure à $300\ mg/m^2$ de Ni.

L'épaisseur de la couche NiCr au-dessus de l'argent est avantageuse pour la protection de la couche d'argent, elle l'est aussi pour ce qui concerne les propriétés optiques de l'ensemble. En particulier pour un même taux de réflexion l'accroissement de la couche protectrice NiCr permet de réduire de façon sensible la quantité d'argent mise en oeuvre.

Avantageusement selon l'invention la quantité d'argent est comprise entre 400 et $700mg/m^2$ et de préférence entre 500 et $650\ mg/m^2$, et de façon particulièrement préférée entre 550 et $600\ mg/m^2$.

Dans ces conditions, les quantités d'argent utilisées, à taux de réflexion équivalent, sont bien moindres ce qui conduit à une économie significative pour les produits obtenus selon l'invention par rapport aux produits proposés par l'art antérieur.

Si le plus souvent l'argent est utilisé sensiblement pur, il peut encore selon des pratiques connues être déposé avec un ou plusieurs autres métaux qui favorisent la formation de structures plus résistantes. Des alliages connus pour améliorer ces propriétés sont notamment ceux d'argent et d'un métal du groupe comprenant le palladium, l'étain, l'aluminium, le calcium, le magnésium, le cuivre, l'indium, l'antimoine, le bismuth et le zinc. Les métaux additionnels sont dans tous les cas en proportions très faibles. Elles ne sont pas supérieures de préférence à 5% atomiques, et de préférence ne sont pas supérieures à 3% atomiques.

Le palladium est le métal additionnel le plus efficace dans l'amélioration des propriétés. Son utilisation est cependant contrariée en raison du coût de ce métal. Compte tenu des variations sensibles de son cours, son utilisation reste potentiellement intéressante.

Entre la feuille de verre et la couche d'argent, la couche primaire est aussi de NiCr. Cette couche est de préférence aussi mince que possible pour maintenir le taux réfléchi le plus élevé sans compromettre le bon accrochage de la couche d'argent et la protection de cette couche contre les migrations en provenance du substrat.

La composition de l'alliage NiCr de cette couche est analogue à celle indiquée ci-dessus à propos de la couche située au dessus de l'argent. La composition des deux couches peut être identique ou non.

De préférence la couche NiCr située sous la couche d'argent est avantageusement d'au plus $15mg/m^2$ de Ni, et de préférence d'au plus de 4 à $12mg/m^2$ de Ni. Une teneur de cette couche de 4 à $10mg/m^2$ est particulièrement préférée.

Dans les conditions indiquées précédemment, les miroirs selon l'invention offrent en outre une bonne neutralité de couleur en réflexion qui se traduit par les valeurs des coordonnées colorimétriques a* et b* du système CIELAB, répondant à la condition pour l'illuminant D65 sous 10° :

$$C^* = (a^{*2} + b^{*2})^{\frac{1}{2}} \le 10$$

et, de préférence,

$$C^* = (a^{*2} + b^{*2})^{\frac{1}{2}} \le 5.$$

Toujours dans les conditions indiquées précédemment, le taux de réflexion obtenu avec les miroirs selon l'invention est avantageusement supérieur à 85% pour un verre clair silico-sodo-calcique ordinaire de 3mm d'épaisseur. En choisissant les caractéristiques de façon appropriée, le même taux de réflexion est supérieur à 88% et de façon particulièrement avantageuse, supérieur à 90%, toujours pour un verre de 3mm.

Les taux de réflexion élevés sont particulièrement avantageux dans le cas de dispositifs incorporant de tels miroirs et utilisés à des fins notamment énergétiques. Le spectre réfléchi qui est utilisé pour déterminer la valeur de cette réflexion globale tend à minimiser la part des rayons de grande longueur d'onde, autrement dit celle des rayons les plus énergétiques. En proportion le rayonnement réfléchi énergétique est encore supérieur, ce qui est appréciable pour les applications de ces miroirs à des fins par exemple, de récupération d'énergie rayonnée.

L'invention est décrite de façon détaillée dans la suite, en faisant référence aux planches de dessins dans lesquelles :

- la figure 1 représente en coupe schématique le système de couche d'un miroir selon l'invention ;

- la figure 2 est un graphique montrant l'influence de l'épaisseur de la couche d'argent sur la réflexion ;

- la figure 3 est un graphique montrant l'influence de la quantité d'argent sur la neutralité de couleur en réflexion.

Les miroirs selon l'invention sont réalisés à l'aide d'une feuille de verre usuel, de préférence sans coloration. La feuille de verre 1 est notamment une feuille de verre silico-sodo-calcique produite dans une installation de type "float".

Le verre est éventuellement trempé pour des raisons de sécurité. Il est généralement plan mais peut aussi avoir été bombé de manière connue.

La feuille de verre 1 est le support d'un système de couches réfléchissant la lumière. Dans les miroirs selon l'invention la lumière incidente qui est réfléchie traverse la feuille de verre à deux reprises.

L'épaisseur de la feuille de verre est fonction de l'utilisation envisagée. Compte tenu de l'absorption propre du verre, pour avoir la réflexion la plus élevée possible, il est préférable de maintenir cette épaisseur la plus petite possible compatible avec l'utilisation considérée. En pratique les épaisseurs sont au moins de 1mm et le plus souvent d'au moins 1,5mm.

La feuille porte sur la face opposée à la source de lumière incidente, un système de couches qui comprend une couche réfléchissante métallique à base d'argent 2. Comme indiqué précédemment cette couche doit être suffisamment épaisse pour garantir une réflexion élevée. Au-delà d'un certain seuil, cependant, un accroissement de cette épaisseur n'apporte plus d'augmentation significative de la réflexion. Il convient donc d'ajuster la quantité d'argent à ce qui est nécessaire pour obtenir le taux de réflexion souhaité.

Dans le choix de l'épaisseur d'argent, la nature des couches avoisinantes, et en particulier celle de la couche 4 qui recouvre la couche d'argent intervient aussi. La nature et l'épaisseur de la couche 4 peuvent contribuer à la valeur de la réflexion obtenue. C'est ce que l'on observe avec une couche 4 de NiCr suffisamment épaisse.

La couche 4 selon l'invention est constituée d'un alliage NiCr. Avantageusement l'alliage est en proportion pondérale sensiblement de 80% de Ni et de 20% de Cr. Dans cet alliage le Ni est le constituant le plus abondant mais aussi celui qui contribue le plus à la protection de l'argent. Son électronégativité fait qu'il réagit plus intensément avec l'oxygène ou l'humidité qui parviendrait à pénétrer le système de couches en dépit de la présence de la laque appliquée.

Si pour protéger la couche d'argent contre les agressions de l'atmosphère extérieure une couche relativement mince de NiCr pourrait suffire, la présence d'une couche plus épaisse contribue aussi à l'amélioration du taux de réflexion.

Quoi qu'il en soit, selon l'invention, la couche NiCr 4 doit être relativement épaisse.

Le système réflecteur comporte en plus de la couche d'argent, éventuellement allié à de faibles quantités d'autres métaux, une couche primaire 3 à base d'un alliage de nickel et de chrome. Cette couche favorise la fixation sur la feuille de verre lorsqu'elle est directement en contact avec celle-ci, l'argent ne conduisant pas à une adhérence suffisante. Par ailleurs cette même couche, qu'elle soit directement au contact du verre ou non, constitue aussi une barrière protectrice de la couche d'argent, par exemple contre les ions en provenance du substrat verrier.

Pour remplir les fonctions indiquées, la couche 3 est avantageusement maintenue de faible épaisseur. Son pouvoir réfléchissant comparé à celui de la couche d'argent est très faible. Pour limiter l'absorption une faible épaisseur est donc préférée.

Les systèmes de couches des miroirs selon l'invention peuvent encore présenter des couches supplémentaires qui améliorent leur résistance aux différents facteurs susceptibles de les altérer, ou qui participent à la solidité de l'ensemble. En particulier il est possible de revêtir le verre d'une couche 6 très mince (quelques Angström) d'une couche faisant obstacle à la migration des ions, notamment alcalins du verre, par exemple une couche de SiO$_2$.

Il est aussi possible de disposer une couche protectrice entre la couche 4 de NiCr et la couche de laque 5, permettant le cas échéant de limiter les interactions entre ces deux couches ou d'améliorer encore la durabilité chimique de l'ensemble.

Différents échantillons de miroirs sont produits pour mettre en évidence leurs propriétés optiques ainsi que leur résistance dans plusieurs tests mécaniques ou chimiques.

Tous les échantillons préparés sont réalisés sur une feuille de verre "float" clair de 2,1mm d'épaisseur. Ces supports suivent un protocole de lavage avant d'être revêtus. Ils sont passés à l'eau contenant un détergent, rincés et séchés.

Les couches sont déposées dans installation de dépôt sous vide par bombardement ionique de cibles métalliques, assisté par magnétron ("magnetron sputtering").

Les cibles utilisées et les conditions sont les suivantes :

- les dépôts des deux couche NiCr sont faits à partir d'un cible NiCr à 20% en poids de Cr, dans une atmosphère d'argon à la pression résiduelle de 3,7mTorr ;

- l'argent est déposé à partir de deux types de cibles : de l'argent pur à 99,99% ou de l'argent allié à 2% atomique d'aluminium, dans une atmosphère d'argon à 5mTorr.

Le dépôt est effectué en courant continu.

Une fois l'ensemble des dépôts réalisé, une laque sans plomb pour miroirs est appliquée. Il s'agit de la laque commercialisée par la société Valspar sous la référence SK 1825.

Les essais rapportés comprennent l'utilisation de couches sous l'argent comprenant soit 4mg/m$^2$ de Ni (dans l'alliage NiCr), soit 6mg/m$^2$ de Ni, soit encore à titre comparatif une couche de Sn se substituant à la couche NiCr.

Dans les essais préalables il apparaît que pour la couche NiCr située au dessus de l'argent, pour une quantité de Ni supérieure à 200mg/m$^2$, un accroissement supplémentaire est pratiquement sans influence significative sur les qualités optiques lorsque la couche d'argent est égale ou supérieure à 400mg/m$^2$. Les essais rapportés sont dans ce domaine. Pour cette raison les essais sont réalisés avec, au-dessus de l'argent, la même couche NiCr comprenant 250mg/m$^2$.

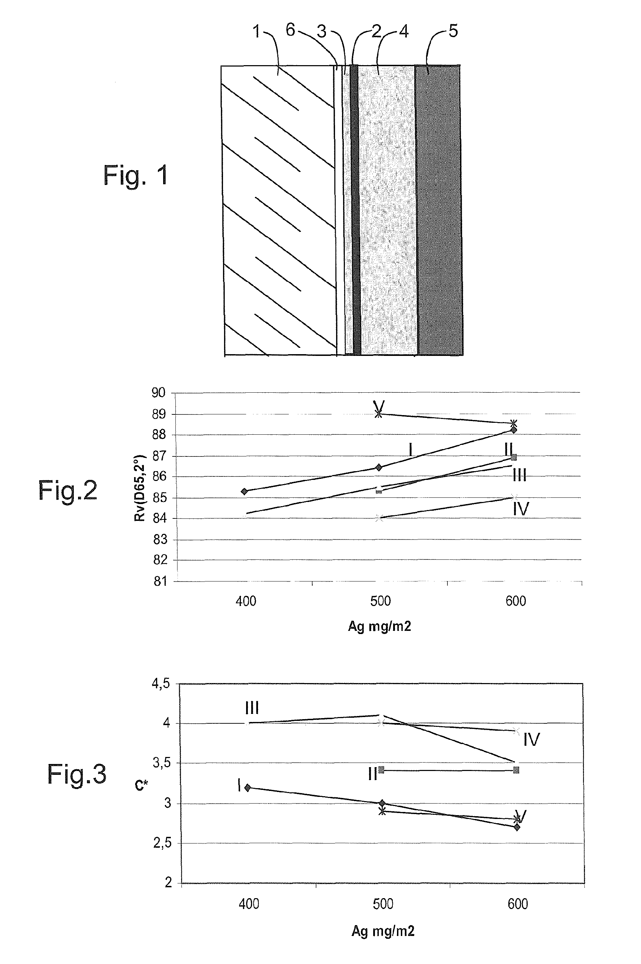

L'influence sur la réflexion de l'épaisseur de la couche d'argent pour les différents échantillons est présentée à la figure 2.

Le graphique montre qu'en règle générale l'accroissement de la quantité d'argent pour une même structure du système de couches conduit à un accroissement de la réflexion. Cette augmentation dans le domaine considéré 400-600mg/m$^2$, est encore sensible. Pour des accroissements supplémentaires de la couche les effets sont peu sensibles.

Les essais dans lesquels la couche sous l'argent est constituée de Sn montrent les limites de ce que l'on peut atteindre avec cette configuration. Les valeurs de réflexion pour les deux épaisseurs d'argent sont pratiquement identiques aux erreurs de mesure près.

On constate aussi que l'échantillon comprenant la couche d'étain est celle qui offre le meilleur pouvoir réfléchissant. Cette couche n'est pas préférée en raison de la fragilité qu'elle montre aux essais de vieillissement réalisés ultérieurement.

Les échantillons (I, II) dans lesquels la couche d'argent est pure sont moins absorbants, et moins "colorés", comme indiqué à propos de la figure 3, et réfléchissent mieux que les échantillons (III, IV) comparables réalisés avec l'argent comprenant de l'aluminium. L'avantage de ces derniers réside dans une meilleure résistance au vieillissement.

Toute choses égales par ailleurs, les échantillons dans lesquels la couche sous l'argent contient 4mg/m$^2$ de Ni (I et III) réfléchissent mieux que les échantillons comparables (II et IV) qui contiennent 6mg/m$^2$ de Ni. Pour avoir la réflexion la plus forte il faut donc maintenir couche aussi mince que possible.

La figure 3 montre l'incidence de la composition du système de couches sur la coloration en réflexion C* mesurée comme la racine carrée de la somme des carrés de a* et b*. La mesure est faite pour l'illuminant D65 sous 10°.

Les variations en fonction des épaisseurs d'argent sont peu significatives dans la gamme considérée. Globalement la coloration reste la même à structure identique.

Les colorations sont les plus faibles pour les échantillons à couche d'argent pur (I et II) et pour l'échantillon comparatif à sous-couche d'étain. Les colorations sont aussi d'autant moindres que la sous-couche NiCr est plus mince (I/II et III/IV).

Des essais de résistance au vieillissement dans différentes conditions sont effectués avec les échantillons précédents et en utilisant diverses laques pour miroirs.

Les laques utilisables selon l'invention sont essentiellement dépourvues de plomb. Elles comprennent des résines et des pigments.

Les résines des laques sont du type acrylique, acryl-amide, vinyl-acrylique, acrylique-styrène, polyamine, polyamide, polyuréthane, phénolique, epoxy, epoxyester, alkide, alkide-uréthane.

La laque est appliquée en quantité limitée à ce qui est nécessaire à l'obtention de la protection mécanique utile. Avantageusement la quantité appliquée est d'au plus 200g/m$^2$ conduisant à une épaisseur à sec qui n'est pas supérieure à 60$\mu$, et de préférence au plus 150g/m$^2$ conduisant à une épaisseur à sec qui n'est pas supérieure à 50$\mu$.

Parmi les meilleures laques figurent :

- SK 1825, SK 9320, SK 9930 de Valspar

- LS 4190 de Landshutter.

Parmi ces laques, les plus efficaces sur l'ensemble des essais de vieillissement sont SK 1825 et LS 4190. Au cours de ces essais, aucun défaut ponctuel supérieur à 100$\mu$ n'apparaît et la largeur de corrosion de bord est toujours inférieure à cette même dimension.

Les essais de vieillissement effectués sont :

- en brouillard salin neutre pendant 240h selon DIN 50021 SS;

- en chaleur sèche à 100°C pendant 500h ;

- en chaleur humide saturée à 90°C pendant 240h ;

- sous écoulement d'eau à 50°C pendant 500h selon DIN 50017 KK;

au choc thermique de quatre cycles de 96h passant de - 40 à +90°C.

**Revendications**

1. Miroir sur feuille de verre comprenant un système de couches dont une couche réfléchissante à base d'argent, sous cette couche d'argent une couche constituée d'un alliage NiCr, dans lequel Ni est en proportion pondérale d'au moins 50%, et au dessus de la couche d'argent une couche métallique protectrice, le système de couches étant revêtu d'une laque pour miroirs.

2. Miroir selon la revendication 1, dans lequel la couche d'argent est recouverte soit d'une couche NiCr comprenant 180mg/m$^2$ de Ni, et de préférence au moins 200mg/m$^2$, soit d'une couche de Cr.

3. Miroir selon la revendication 2 dans lequel la couche NiCr recouvrant la couche d'argent comprend au plus 350mg/m$^2$ de Ni, et de préférence au plus 300mg/m$^2$.

4. Miroir selon l'une des revendications précédentes dans lequel la couche à base d'argent comprend entre 400 et 700mg/m$^2$ d'argent, et de préférence entre 500 et 650mg/m$^2$ d'argent.

5. Miroir selon l'une des revendications précédentes dans lequel la couche NiCr située sous l'argent comprend au plus 15mg/m$^2$ de Ni, et de préférence de 4 à 12mg/m$^2$ de Ni.

6. Miroir selon la revendication 5 dans lequel la couche NiCr située sous l'argent comprend de 4 à 10mg/m$^2$ de Ni.

7. Miroir selon l'une des revendications précédentes dans lequel la couche à base d'argent est alliée avec au moins un métal du groupe comprenant Pd, Al, Sn, Ca, Mg, In, Sb, Bi, Cu et Zn, la proportion atomique de ce métal additionnel étant au plus de 5% et de préférence au plus de 3%.

8. Miroir selon l'une des revendications précédentes dans lequel les épaisseurs de différentes couches du système réfléchissant sont choisies de telle sorte que la réflexion D65 sous 2°, soit égale au moins à 85%, le système étant déposé sur une feuille de verre clair silico-sodo-calcique de 2mm dont l'absorption lumineuse est au plus de 2% de la lumière transmise.

9. Miroir selon l'une des revendications précédentes dans lequel les épaisseurs de différentes couches du système réfléchissant sont choisies de telle sorte que la coloration en réflexion pour l'illuminant D65, sous un angle de 10° est telle que dans le système CIELAB les coordonnées colorimétriques a* et b* satisfont à la relation $(a*^2 + b*^2)^{1/2} \leq 10$ , et de préférence $(a*^2 + b*^2)^{1/2} \leq 5$.

10. Miroir selon l'une des revendications précédentes dans lequel la laque dont est revêtu le système de couches comprend une résine et des pigments l'ensemble sensiblement exempt de plomb.

11. Miroir selon la revendication 10 dans lequel la résine de la laque est une résine acrylique, acryl-amide, vinyl-acrylique, acrylique-styrène, polyamine, polyamide, polyuréthane, phénolique, epoxy, epoxy-ester, alkide, alkide-uréthane.

12. Miroir selon la revendication 11 dans lequel la laque est l'une de celle du groupe comprenant les laques commercialisées sous les noms SK 1825, SK 9320, SK 9930, LS 4190.

13. Miroir selon l'une des revendications 10 à 12 dans lequel la laque est appliquée à raison d'au plus 200g/m$^2$ conduisant à une épaisseur à sec qui n'est pas supérieure à 60$\mu$, et de préférence au plus 150g/m$^2$ conduisant à une épaisseur à sec qui n'est pas supérieure à 50$\mu$.

Fig. 1

Fig.2

Fig.3

**Office européen
des brevets**

**RAPPORT DE RECHERCHE EUROPEENNE**

Numéro de la demande

EP 07 10 3038

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| X | US 6 416 194 B1 (DEMIRYONT HUELYA [US]) 9 juillet 2002 (2002-07-09) * colonne 3, ligne 39 - ligne 63 * * colonne 7, ligne 4 - ligne 31 * * colonne 10, ligne 19 - colonne 12, ligne 6; exemple 1; tableaux 1,2 * ----- | 1-6,9 | INV. G02B5/08 ADD. C03C17/38 |
| A | US 5 514 476 A (HARTIG KLAUS W [US] ET AL) 7 mai 1996 (1996-05-07) * revendications; tableaux 2-4 * ----- | 1,4-6,8, 9 | |
| A | US 5 215 832 A (HUGHES ZEPHUREN J [US] ET AL) 1 juin 1993 (1993-06-01) * revendications; exemples * ----- | 1,10-13 | |
| A | WO 99/64900 A (UNIV CALIFORNIA [US]) 16 décembre 1999 (1999-12-16) * page 7, ligne 26 - page 11, ligne 18; revendications; figures 1-4 * ----- | 1,4-6 | |
| | | | DOMAINES TECHNIQUES RECHERCHES (IPC) G02B C03C |

Le présent rapport a été établi pour toutes les revendications

| Lieu de la recherche | Date d'achèvement de la recherche | Examinateur |
|---|---|---|
| Munich | 3 août 2007 | Lindner, Thomas |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
......................................................................
& : membre de la même famille, document correspondant

EPO FORM 1503 03.82 (P04C02)

**ANNEXE AU RAPPORT DE RECHERCHE EUROPEENNE
RELATIF A LA DEMANDE DE BREVET EUROPEEN NO.**

EP 07 10 3038

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

03-08-2007

| Document brevet cité au rapport de recherche | | Date de publication | Membre(s) de la famille de brevet(s) | | Date de publication |
|---|---|---|---|---|---|
| US 6416194 | B1 | 09-07-2002 | AUCUN | | |
| US 5514476 | A | 07-05-1996 | AT | 170831 T | 15-09-1998 |
| | | | CA | 2165106 A1 | 16-06-1996 |
| | | | DE | 69504628 D1 | 15-10-1998 |
| | | | DE | 69504628 T2 | 18-03-1999 |
| | | | DK | 717014 T3 | 07-06-1999 |
| | | | EP | 0717014 A1 | 19-06-1996 |
| | | | ES | 2123892 T3 | 16-01-1999 |
| | | | FI | 956026 A | 16-06-1996 |
| | | | HU | 74556 A2 | 28-01-1997 |
| | | | JP | 2878173 B2 | 05-04-1999 |
| | | | JP | 8268733 A | 15-10-1996 |
| | | | NO | 955083 A | 17-06-1996 |
| | | | PL | 311864 A1 | 24-06-1996 |
| | | | PL | 178236 B1 | 31-03-2000 |
| US 5215832 | A | 01-06-1993 | AUCUN | | |
| WO 9964900 | A | 16-12-1999 | AU | 4955599 A | 30-12-1999 |

Pour tout renseignement concernant cette annexe : voir Journal Officiel de l'Office européen des brevets, No.12/82

**EP 1 972 970 A1**

## RÉFÉRENCES CITÉES DANS LA DESCRIPTION

**Documents brevets cités dans la description**

- EP 632294 A